## Europäisches Patentamt

(19) **European Patent Office**

**Office européen des brevets**

(11) Publication number: **0 001 513**

**B1**

(12)    **EUROPEAN PATENT SPECIFICATION**

(45) Date of publication of patent specification: **26.08.81**

(51) Int. Cl.³: **G 01 N 31/10, B 01 J 23/18**

(21) Application number: **78300467.4**

(22) Date of filing: **06.10.78**

(54) Process and catalyst for determining nitrogen in a sample according to the Kjeldahl principle.

(30) Priority: **07.10.77 DK 4452/77**

(43) Date of publication of application:
**18.04.79 Bulletin 79/8**

(45) Publication of the grant of the European patent:
**26.08.81 Bulletin 81/34**

(84) Designated Contracting States:
**BE CH DE FR GB LU NL SE**

(56) References cited:
**FR - A - 2 220 061**
**GB - A - 896 082**
**GB - A - 904 602**
**NL - A - 281 143**
**US - A - 3 964 869**

(73) Proprietor: **A/S N. Foss Electric**
**Slangerupgade 69**
**DK-3400 Hilleroed (DK)**

(72) Inventor: **Christoffersen, Steen Rupert**
**Gl. Holmegaardsvej 27**
**DK-3400 Hilleroed (DK)**
Inventor: **Bjarno, Ole-Christian**
**Pilekaeret 6**
**DK-2840 Holte (DK)**

(74) Representative: **Smith, Sydney et al,**
**Elkington and Fife High Holborn House 52/54**
**High Holborn**
**London WC1V 6SH (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# 0 001 513

Process and catalyst for determining nitrogen in a sample according to the Kjeldahl principle

This invention relates to a process and catalyst for determining nitrogen in a sample according to the Kjeldahl principle.

In the Kjeldahl anaylsis, it is known to use a catalyst for promoting the digestion so that the analysis may be performed in a shorter time. The catalyst must be one which does not give rise to systematic error by forming by-products consuming part of the nitrogen. A wide range of substances have been tested as catalysts, for example oxides of titanium, lead, copper, manganese, bismuth, iron and zinc, but the most efficient catalyst and the one used extensively in practice is mercuric oxide, which *inter alia*, has the advantage of yielding an especially effective digestion of nicotinic acid. Among nitrogen compounds, nicotinic acid is known to be the most difficult one to digest and the incomplete digestion of nicotinic acid will result in a systematic error in the Kjeldahl analysis.

Thus, mercuric oxide has been found to give excellent results as a digestion catalyst in the Kjeldahl analysis, both in the conventional Kjeldahl analysis and in the automated Kjeldahl analysis for which a specific apparatus has been developed, the so-called "Kjel-Foss Automatic", the construction and principle of which are disclosed in U.S. Patent No. 3,964,869. However, it is now evident that the environmental and health hazards connected with mercury compounds make it desirable to avoid the use of mercuric oxide in the considerable amounts which are needed when performing a great number of analyses, such as in the automated equipment, and it would be a definite advance to provide a catalyst which is more acceptable than mercuric oxide with respect to environmental and health considerations, but which gives a sufficiently efficient digestion of the nitrogenous compounds, especially nicotinic acid, to ensure that the results of the analyses are sufficiently exact for practical purposes.

It has now been found that this object may be achieved by using an antimonate as the catalyst for accelerating the digestion in the determination of nitrogen in a sample according to the Kjeldahl principle. As maybe seen from the data in the Examples, below the use of an antimonate as the digestion catalyst in amounts which are responsible and easily adaptable in practice especially of nicotinic acid, that the analysis results obtainable are comparable with the results which could previously only be obtained using mercuric oxide.

U.S. Patent No. 3,335,097 discloses Kjeldahl digestion catalysts which do not contain mercury. The catalysts in question utilize copper selenite as the active component, but the use of selenium as the catalyst in the Kjeldahl digestion does not show the same advantages as the use of an antimonate, since selenium compounds are generally considered less safe than antimony compounds and since selenium sublimes at high temperatures it is liable to be evolved from the solution at the high temperature prevailing during the Kjeldahl digestion, cf. Example 8 below.

It is known, for example from British Patent Nos. 864,666; 904,602 and 1,271,191 and from German Auslegeschrift No. 2,039,497, to use antimony and antimony compounds as catalysts in various chemical processes, but all of these reference disclose the use of antimony compounds in syntheses and they do not disclose or indicate the use of antimony or antimony compounds as digestion catalysts.

The present invention provides a process for the determination of the nitrogen content of a sample according to Kjeldahl principle using a catalyst, characterised in that the catalyst is an antimonate or a mixed oxide of a metal oxide and $Sb_2O_5$ and/or $Sb_2O_4$.

More particularly, the present invention provides such a process characterised in that the sample is digested with concentrated sulphuric acid in the presence of the catalyst and ammonia is distilled from the ammonium sulphate formed into a measured quantity of standard sulphuric acid.

The present invention also provides a digestion catalyst for the determination of the nitrogen content of a sample according to the Kjeldahl principle which comprises an antimonate or a mixed oxide of a metal oxide and $Sb_2O_5$ and/or $Sb_2O_4$ and a boiling point-increasing salt.

As indicated above, for the present purposes, the antimony-containing catalysts are compounds of antimony (V), including both true antimonates, i.e. salts which are theoretically or in practice derived from antimony(V) acid: $HSbO_3$ (or $HSbO_3 \cdot 3H_2O = H[Sb(OH)_6]$) or hydrates of such salts: $M(SbO_3)y \cdot xH_2O$, especially $M[Sb(OH)_6]y$. (x—3) $H_2O$, for example leuconin ($NaSbO_3$) or potassium antimonate ($K[Sb(OH)_6]$), and the so-called "antimonates", i.e. mixed oxides of metal oxides and $Sb_2O_5$ and/or $Sb_2O_4$, for example $(PbO)_2 \cdot Sb_2O_5$ (= $Pb_2Sb_2O_7$), $(PbO)_3 \cdot Sb_2O_5$ (= $Pb_3[SbO_4]_2$) or hydrates thereof, for example $MgO \cdot Sb_2O_5 \cdot 12H_2O$.

For the purposes of the present invention, the preferred antimonate is potassium antimonate and, in practice, it is preferred to use the commercially available form thereof which is potassium antimonate hemihydrate $K[Sb(OH)_6] \frac{1}{2}H_2O$. In the following description, the term "potassium antimonate" designates this hemihydrate, unless otherwise indicated.

Analogously to the nitrogen determination according to the Kjeldahl principle using other catalysts, the antimonate may be added as a powder, a granulate of tablets, or it may be added as a solution or slurry in water or, preferably, in a component which is to be added in the course of the digestion, such as hydrogen peroxide or sulphuric acid, or mixtures thereof.

The amount of potassium antimonate used in the Kjeldahl digestion will preferably be from 0.5 to

2

10 g per g of the sample to be subjected to the Kjeldahl digestion. As may be seen from the Examples below, the completeness of the digestion increases with increasing amount of antimonate. For use in certain existing equipment, the size of the reaction vessel and suctioning system of the equipment may limit the amount of catalyst which may be used per g of sample, for example, in the commercial "Kjel-Foss Automatic" equipment the suitable amount of potassium antimonate per g of sample will be from 1.5 to 5 g, preferably about 2.5 g.

It is often especially convenient to add the antimonate together with salts increasing the boiling point of the digestion mixture, preferably sodium sulphate or potassium sulphate or mixtures thereof, potassium sulphate being preferred. A suitable amount of potassium sulphate per g of the sample to be subjected to the Kjeldahl digestion is from 6 to 20 g, preferably from 10 to 15 g. A particularly suitable form of the catalyst is tablets which, like the conventional mercuric oxide-containing tablets which are used, for example, in connection with the automated "Kjel-Foss Automatic", should be prepared without the use of binders, as binders might give rise to errors in the analyses due to the nitrogen content thereof, either inherent or as an impurity. Preferred tablets have a potassium antimonate content of from 0.2 to 3 g per tablet and a potassium sulphate content of from 2 to 5 g per tablet. When the tablets are to be used in existing automatic equipment of the type described above, a potassium antimonate content of 0.5 to 1.5 g per tablet, preferably about 0.8 g per tablet, is suitable when 3 tablets per sample of about 1 g are used in accordance with the general instructions for the above-mentioned equipment, as this content of potassium antimonate is suitable in relation to the size of the reaction vessel and the suctioning system of the equipment. In cases where this limitation imposed by the equipment does not apply, but where it is desired to perform the analysis in a corresponding manner with addition of 3 tablets per sample having a sample weight of about 1 g, a potassium antimonate content of from 2 to 3 g per tablet may be used in order to obtain an almost quantitative digestion of nicotinic acid, (see Example 4 below). The tablets preferably have a diameter of about 19 mm and a thickness of about 7 mm and tablets for use in existing "Kjel-Foss Automatic" equipment preferably tablets containing 0.8 g of potassium antimonate and 4.6 g of potassium sulphate. Tablets are generally prepared from analysis grade starting materials without the use of binder, by moistening a mixture of potassium antimonate powder and finely ground potassium sulphate with water and thereafter compressing the moistened mixture into tablets.

When the potassium antimonate is used in a solution or slurry, it is preferred to use potassium antimonate mixed with concentrated sulphuric acid in an amount of 0.2 to 2.0 g/ml, especially from 0.6 to 0.8 g/ml.

When a different antimonate is used instead of potassium antimonate, the weight of the antimonate should be adjusted accordingly.

As mentioned above, the antimonate catalyst is of particular importance in connection with the automated nitrogen determination according to the Kjeldahl principle, for example using a "Kjel-Foss Automatic", and this preferred embodiment of the present process comprises performing, in the automated Kjeldahl analysis, the following digestion stages which each takes about 3 minutes:

(a) a sample of about 1 g is placed in a flask, catalyst and salt for increasing the boiling point of the digestion mixture are added in tablet form, and hydrogen peroxide and concentrated sulphuric acid are added;

(b) the digestion mixture is heated to boiling at about 400°C, during which water and hydrogen peroxide are evaporated or consumed;

(c) the digestion mixture is maintained at the boiling point, with a temperature rise to at the most 410°C.

As mentioned above, it is preferred to use, in stage (a), 3 tablets having the preferred content of potassium antimonate and potassium sulphate, as explained above, about 9 ml of 35% hydrogen peroxide and from 10 to 16 ml of concentrated sulphuric acid.

As may be seen from the Examples below, the nitrogen contents found using the catalyst according to the present invention are very close to the nitrogen contents found using mercuric oxide as the digestion catalyst, the difference between the mercuric oxide catalyst and the catalyst according to the present invention being almost negligible when antimonate amounts towards the higher part of the above-mentioned ranges are used. However, even though the use of antimonate amounts towards the lower part of the range may give rise to a certain small error, this may easily be overcome, while retaining the advantages of the present invention, by performing the small correction necessary to bring the nitrogen contents determined using the antimonate catalyst into agreement with the values determined using mercuric oxide. The necessary correction parameters may be determined empirically in connection with the particular analysis routine and examples of such corrections with either a correction factor or a correction factor plus a constant are given in Examples 5 and 6 below.

Another way to obtain maximum conformity with nitrogen contents determined by Kjeldahl digestion using mercuric oxide as the digestion catalyst is to combine the antimonate catalyst with minor amounts of co-catalysts. Co-catalysts which have been found effective for obtaining conformity between the nitrogen values found using, on the one hand, mercuric oxide and, on the other hand, antimonate amounts towards the lower part of the above-mentioned range include copper, zinc and cobalt compounds, among which copper and zinc compounds are preferred as they are considered safer, from an environmental and health point of view, than cobalt compounds. Although copper compounds may also not be desirable in large amounts, it has been found that a suitable co-catalyst combination is a combination comprising a minimum amount of copper compound combined with a somewhat larger amount of zinc compound.

Suitable amounts of cobalt and zinc compounds for use as co-catalysts are, for example, from 0.15 to 1.2 g, preferably from 0.3 to 0.9 g, especially about 0.6 g, of zinc sulphate heptahydrate and from 0.03 to 1 g, preferably from 0.1 to 0.3 g, especially about 0.2 g, of cupric sulphate pentahydrate, per g of the sample to be subjected to the digestion. If other zinc or copper compounds are used, the relative amount thereof may be adjusted accordingly and, in principle, any zinc and copper salt having a suitable nitrogen-free anion may be employed.

When the present antimonate catalyst is formulated as tablets as discussed above, corresponding suitable amounts of co-catalysts are from 0.05 to 0.4, preferably from 0.1 to 0.3, particularly about 0.2 g, of zinc sulphate heptahydrate per tablet and from 0.01 to 0.3, preferably from 0.03 to 0.1, particularly about 0.07, g of cupric sulphate pentahydrate per tablet. A specific example of a preferred tablet containing a co-catalyst is a tablet containing about 0.8 g of potassium antimonate, about 4.8 g of potassium sulphate, about 0.2 g of zinc sulphate heptahydrate, and about 0.07 g of cupric sulphate pentahydrate.

According to one particular embodiment of the present invention, the antimonate and optionally the above-mentioned preferred co-catalysts may be used in combination with one or more other Kjeldahl digestion catalysts, for example $TiO_2$, HgO or $ZrO_2$. However, a satisfactory digestion of even nicotinic acid may be obtained using the antimonate alone or in combination with zinc or copper as co-catalysts and, from the above-mentioned environmental and health considerations, it will usually be preferred to use a catalyst according to the present invention without any addition of mercuric oxide.

It is particularly preferred to carry out the analysis automatically or semi-automatically.

The present invention is illustrated by the following Examples.

Examples 1 to 3

In Examples 1 to 3, the nitrogen contents of 0.5 g samples of pork, rape, soy bean meal and nicotinic acid were determined according to the Kjeldahl principle in a "Kjel-Foss Automatic" using as catalyst 0.75 g of mercuric oxide, 1 g of potassium antimonate and 1 g of titanium dioxide, respectively. The run with mercuric oxide was used as a reference. The determinations were performed according to the conventional procedure.

The values determined are stated in Table I below, wherein the amount of nitrogen found is stated as compared to the amount found with mercuric oxide (refound amount) together with the standard deviation on the percentage found in the test in question. The reproducibility was calculated on the basis of 5 measurements.

Table I

| Example | | | 1 | 2 | 3 |
|---|---|---|---|---|---|
| R u n | | Catalyst | HgO | $K[Sb(OH)_6]$ | $TiO_2$ |
| | | Test material | (Reference) | | |
| | a | Pork | 100% | 99.1% | 62.8% |
| | | | 1.6% | 0.96% | 11% |
| | b | Rape | 100% | 99.6% | 99.1% |
| | | | 0.4% | 0.4% | 0.5% |
| | c | Soy bean meal | 100% | 100.6% | 97.2% |
| | | | 0.24% | 0.7% | 1.2% |
| | d | Nicotinic acid | 100% | 49.8% | 39.0% |
| | | | 0.7% | 3.3% | 7.8% |
| | | Mean value of the refound amount in runs a to c | 100% | 99.8% | 86.4% |
| | | | 0.75% | 0.7% | 4.2% |

4

### Example 4

In a "Kjel-Foss Automatic" digestions of nicotinic acid were made using various amounts of potassium antimonate powder. The results are stated in Table II below as the refound content of nitrogen in per cent of the amount found using 0.75 g of mercuric oxide.

### Table II

| Amount of potassium antimonate used, g | 1 | 2 | 3 | 4 | 5 | 6 |
|---|---|---|---|---|---|---|
| Refound content of nitrogen, % | 34.5 | 48.6 | 62.8 | 77.0 | 89.3 | 98.2 |

Apart from the amount of catalyst added, the determination of nitrogen was carried out in the conventional manner.

As may be seen from the above results, an almost 100% digestion was obtained using an amount of potassium antimonate of 6 g per g of test material.

### Examples 5 and 6

In a "Kjel-Foss Automatic", the nitrogen content was determined in a wide range of nitrogen-containing substrates according to the conventional procedure. In Example 5, 3 of the commercial "Foss-Tabs", each containing 0.25 g of mercuric oxide and 5 g of potassium sulphate, were used, while in Example 6, 3 tablets, each containing 0.8 g of potassium antimonate and 4.6 g of potassium sulphate were used. The nitrogen contents determined using mercuric oxide and the amounts of nitrogen refound using potassium antimonate are stated in Table III below, together with the respective standard deviations. In cases where the refound value was below 97% or above 99%, as well as in cases where the reproductibility was especially bad, 10 or 20 determinations were performed. In column $\%N_{Sb}$ corr. are stated the values obtained after the necessary small correction of the values determined using the potassium antimonate catalyst and in the column "dr(%)" are stated the deviations between the thus-corrected values and the values determined using the mercuric oxide catalyst. In the correction, the formula: $\%N$ corr. $= \%N$ determined $\times 1.0252$ was used for nitrogen contents below 3.5%, while the formula: $\%N$ corr. $= \%N$ determined $\times 1.0074 + {-}.070$ was used for nitrogen contents above 3.5%. These algorithms were determined empirically.

### Table III

Example 5

| Product | Number of samples | Mercuric oxide | |
|---|---|---|---|
| | | %N | Sr(%) |
| Soup | 4 | 2.00 | 0.64 |
| Almonds | 4 | 4.02 | 0.60 |
| Egg powder | 4 | 1.92 | 0.21 |
| Maize | 4 | 1.43 | 0.18 |
| Soy meal | 4 | 3.57 | 0.47 |
| Coconut expellets | 4 | 3.30 | 0.77 |
| Palm oil cake | 4 | 2.64 | 0.61 |
| Gelatine | 4 | 4.77 | 0 |
| Linseed | 4 | 3.54 | 1.85 |
| Wheat bran | 4 | 2.22 | 0.72 |
| Milk powder | 4 | 5.71 | 0.28 |
| Sesame cake | 4 | 7.52 | 0.17 |

TABLE III (cont'd)

| Product | Number of samples | Mercuric oxide | |
|---|---|---|---|
| | | %N | Sr(%) |
| Green fodder meal | 4 | 2.86 | 1.6 |
| Mash | 4 | 5.26 | 0.58 |
| Milupa | 4 | 2.10 | 0.99 |
| Broad beans | 4 | 4.42 | 0.47 |
| Casein | 4 | 7.25 | 0.13 |
| Spice mixture | 4 | 1.43 | 1.2 |
| Liver paste | 4 | 2.11 | 0.6 |
| Barley | 4 | 1.68 | 0.95 |
| Rat faeces | 4 | 0.665 | 0 |
| L-Proline | 4 | 6.1 | 0.29 |
| L-Histidine | 4 | 6.75 | 0.30 |
| Fish meal | 10 | 5.35 | 1.13 |
| Acetanilide | 10 | 5.20 | 0.40 |
| Blood meal | 10 | 7.35 | 0.30 |
| Cotton seed expellets | 10 | 1.57 | 0.46 |
| DL-Tryptophan | 10 | 6.70 | 0.81 |
| Cheese 30% | 10 | 7.70 | 0.33 |
| "Nesquick" | 10 | 0.84 | 0.76 |
| L-Lysin, HCl | 10 | 7.65 | 0.42 |
| Pork | 20 | 3.17 | 2.17 |
| Frankfurters | 20 | 2.35 | 1.83 |
| Meat-and-bone meal | 20 | 3.96 | 1.56 |
| Nicotinic acid | 10 | | |
| amide | 10 | 5.70 | 0.65 |
| Danish salami | 20 | 2.30 | 2.16 |

# 0 001 513

Table III (continued)

Example 6

| Product | Potasssium antimonate | | % re-found | %N corr. | dr(%) |
|---|---|---|---|---|---|
| | %N | Sr(%) | | | |
| Soup | 1.95 | 1.2 | 97.5 | 2.00 | 0 |
| Almonds | 3.95 | 0.4 | 98.2 | 4.04 | 0.50 |
| Egg powder | 1.85 | 0.4 | 96.6 | 1.90 | 0.99 |
| Maize | 1.41 | 0.66 | 98.6 | 1.45 | 1.39 |
| Soy meal | 3.48 | 0.55 | 97.3 | 3.58 | 0.16 |
| Coconut expellets | 3.22 | 0.77 | 97.6 | 3.30 | 0 |
| Palm oil cake | 2.59 | 0.36 | 98.1 | 2.66 | 0.75 |
| Gelatine | 4.62 | 0 | 96.9 | 4.72 | 0.96 |
| Linseed | 3.44 | 1.35 | 97.2 | 3.53 | 0.38 |
| Wheat bran | 2.18 | 1.78 | 98.2 | 2.23 | 0.45 |
| Milk powder | 5.62 | 0.14 | 98.4 | 5.74 | 0.52 |
| Sesame cake | 7.42 | 0.12 | 98.7 | 7.54 | 0.33 |
| Green fodder meal | 2.80 | 1.2 | 97.9 | 2.87 | 0.35 |
| Mash | 5.17 | 0.93 | 98.3 | 5.28 | 0.35 |
| Milupa | 2.05 | 0.39 | 97.6 | 2.10 | 0 |
| Broad beans | 4.35 | 0.55 | 98.4 | 4.45 | 0.68 |
| Casein | 7.1 | 0.67 | 98.2 | 7.22 | 0.41 |
| Spice mixture | 1.39 | 0.99 | 97.2 | 1.43 | 0 |
| Liver paste | 2.06 | 1.7 | 97.6 | 2.11 | 0 |
| Barley | 1.65 | 1.1 | 98.2 | 1.69 | 0.59 |
| Rat faeces | 0.645 | 1.1 | 97.0 | 0.661 | 0.56 |
| L-Proline | 6.0 | 0.35 | 98.5 | 6.11 | 0.23 |
| L-Histidine | 66.2 | 0.83 | 98.1 | 6.74 | 0.16 |
| Fish meal | 5.2 | 0.80 | 97.2 | 5.31 | 0.78 |
| Acetanilide | 5.10 | 0.51 | 98.1 | 5.21 | 0.15 |
| Blood meal | 7.25 | 0.27 | 98.6 | 7.37 | 0.32 |
| Cotton seed expellets | 1.53 | 0.56 | 97.1 | 1.57 | 0 |
| DL-Tryptophan | 6.55 | 0.60 | 98.1 | 6.67 | 0.47 |
| Cheese 30% | 7.50 | 0.46 | 97.4 | 7.66 | 0.52 |

7

TABLE III (cont'd)

| Product | Potassium antimonate | | % re-found | %N corr. | dr(%) |
|---|---|---|---|---|---|
| | %N | Sr(%) | | | |
| "Nesquick" | 0.82 | 0.63 | 97.6 | 0.84 | 0 |
| L-Lysin, HCl | 7.60 | 0.32 | 99.2 | 7.73 | 1.00 |
| Pork | 3.05 | 1.21 | 96.2 | 3.13 | 1.26 |
| Frankfurters | 2.29 | 0.84 | 97.4 | 2.35 | 0 |
| Meat-and-bone meal | 3.83 | 1.11 | 96.7 | 3.93 | 0.80 |
| Nicotinic acid amide | 5.58 | 0.47 | 97.9 | 5.69 | 0.15 |
| Danish salami | 2.25 | 0.95 | 97.8 | 2.31 | 0.43 |

Example 7

Tablets containing 0.8 g of potassium antimonate, 0.2 g of zinc sulphate heptahydrate, 0.07 g of cupric sulphate pentahydrate and 4.8 g of potassium sulphate, were compared with "Foss-Tabs" having the composition stated in Example 5.

The protein content was determined in various materials for the fodder production (Table IV) and in various meat products (Table V) and the nitrogen content was determined in various pure compounds (Table VI).

The "setting for $H_2SO_4$" indicates the number of ml of concentrated sulphuric acid added in accordance with the following scheme:

| Setting for $H_2SO_4$ | ml of concentrated sulphuric acid |
|---|---|
| 40 | 12.4 |
| 25 | 11.7 |
| 45 | 12.6 |
| 48 | 12.7 |
| 50 | 12.8 |
| 70 | 13.4 |

It was found necessary to correct the protein contents determined using the catalyst tablets according to the present invention.

**0 001 513**

Table IV

| Test material | Sample weight, g | Setting for $H_2SO_4$ | Catalyst | Number of samples |
|---|---|---|---|---|
| Cotton seed expellets | 0.5 | 40 | Hg | 20 |
| | 0.5 | 40 | Sb | 19 |
| Milk powder | 0.5 | 40 | Hg | 6 |
| | 0.5 | 40 | Sb | 6 |
| Rape | 1.0 | 70 | Hg | 12 |
| | 0.5 | 50 | Sb | 20 |
| Fish meal | 0.5 | 40 | Hg | 20 |
| | 0.5 | 40 | Sb | 20 |
| Coconut expellets | 1.0 | 48 | Hg | 20 |
| | 1.0 | 48 | Sb | 20 |
| Green fodder meal | 0.5 | 40 | Hg | 19 |
| | 0.5 | 40 | Sb | 19 |
| Palm cake | 1.0 | 45 | Hg | 20 |
| | 1.0 | 45 | Sb | 20 |
| Meat-and-bone meal | 0.5 | 40 | Hg | 20 |
| | 0.5 | 40 | Sb | 20 |
| Barley | 1.0 | 40 | Hg | 19 |
| | 1.0 | 40 | Sb | 19 |
| Blood meal | 0.5 | 40 | Hg | 16 |
| | 0.5 | 40 | Sb | 20 |

Mean value

**0 001 513**

Table IV (cont.)

| Test materials | Protein contents found, % | Relative standard deviation, % | Refound contents of protein, % |
|---|---|---|---|
| Cotton seed expellets | 19.93 | 1.74 | |
| | 20.15 | 2.65 | 100.1 |
| Milk powder | 26.78 | 0.37 | |
| | 26.93 | 0.45 | 100.6 |
| Rape | 21.14 | 0.4 | |
| | 21.26 | 0.9 | 100.6 |
| Fish meal | 67.4 | 0.7 | |
| | 67.5 | 0.7 | 100.1 |
| Coconut expellets | 20.8 | 1.0 | |
| | 20.9 | 0.6 | 100.5 |
| Green Fodder meal | 17.45 | 3.1 | |
| | 17.61 | 3.0 | 100.9 |
| Palm cake | 16.89 | 1.2 | |
| | 16.82 | 1.7 | 99.7 |
| Meat-and-bone meal | 49.4 | 0.4 | |
| | 49.8 | 0.6 | 100.8 |
| Barley | 9.0 | 1.8 | |
| | 9.1 | 2.5 | 101.1 |
| Blood meal | 91.39 | 0.41 | |
| | 92.06 | 0.38 | 100.7 |
| Mean value | | 1.1 | |
| | | 1.3 | 100.6 |

10

**0 001 513**

Table V

| Test material | Sample weight, g | Setting for $H_2SO_4$ | Catalyst | Number of samples |
|---|---|---|---|---|
| Bacon | 0.5 | 40 | Hg | 20 |
| | 0.5 | 40 | Sb | 20 |
| Ham sausage | 0.5 | 40 | Hg | 20 |
| | 0.5 | 40 | Sb | 20 |
| Liver paste | 0.5 | 40 | Hg | 20 |
| | 0.5 | 40 | Sb | 20 |
| Danish salami | 0.5 | 40 | Hg | 20 |
| | 0.5 | 40 | Sb | 18 |
| Pork | 0.5 | 40 | Hg | 20 |
| | 0.5 | 40 | Sb | 20 |
| Beef | 0.5 | 40 | Hg | 20 |
| | 0.5 | 40 | Sb | 20 |
| Mean value | | | | |

Table V (cont.)

| Test material | Protein contents found, % | Relative standard deviation, % | Refound contents of protein, % |
|---|---|---|---|
| Bacon | 16.58 | 1.7 | |
| | 17.03 | 1.4 | 102.7 |
| Ham sausage | 15.56 | 2.1 | |
| | 15.80 | 2.8 | 101.5 |
| Liver paste | 9.4 | 4.2 | |
| | 9.3 | 4.3 | 98.9 |
| Danish salami | 14.8 | 2.0 | |
| | 14.8 | 2.0 | 100.0 |
| Pork | 21.6 | 1.4 | |
| | 21.9 | 0.9 | 101.4 |
| Beef | 20.67 | 1.3 | |
| | 21.02 | 1.7 | 101.7 |
| Mean value | | 2.1 | |
| | | 2.2 | 101.0 |

**0 001 513**

Table VI

| Test material | Sample weight, g | Setting for $H_2SO_4$ | Catalyst | Number of samples |
|---|---|---|---|---|
| Nicotinic acid | 0.5 | 25 | Hg | 20 |
| | 0.5 | 25 | Sb | 19 |
| Acetanilide | 0.5 | 25 | Hg | 19 |
| | 0.5 | 40 | Sb | 19 |
| Casein | 0.5 | 40 | Hg | 20 |
| | 0.5 | 40 | Sb | 20 |
| L-Proline | 0.5 | 40 | Hg | 10 |
| | 0.5 | 40 | Sb | 10 |
| L-Lysine | 0.5 | 40 | Hg | 20 |
| | 0.5 | 40 | Sb | 20 |
| DL-Tryptophan | 0.5 | 40 | Hg | 20 |
| | 0.5 | 40 | Sb | 18 |
| $KNO_3$ | 0.5 | 40 | Hg | 20 |
| | 0.5 | 40 | Sb | 20 |

Mean value (without nicotinic acid)

Table VI (cont.)

| Test material | Protein contents found, % | Relative standard deviation, % | Refound contents of protein, % |
|---|---|---|---|
| Nicotinic acid | 11.36 | 0.3 | |
| | 10.80 | 1.2 | 95.1 |
| Acetanilide | 10.36 | 0.9 | |
| | 10.40 | 1.1 | 100.4 |
| Casein | 14.98 | 0.5 | |
| | 14.96 | 0.5 | 99.9 |
| L-Proline | 12.21 | 0.3 | |
| | 12.11 | 0.6 | 98.6 |
| L-Lysine | 15.34 | 0.3 | |
| | 15.14 | 0.5 | 98.7 |
| DL-Tryptophan | 13.59 | 0.16 | |
| | 13.53 | 0.34 | 99.6 |
| $KNO_3$ | 0.085 | | |
| | 0.395 | | |
| Mean value (without nicotinic acid) | | 0.5 | |
| | | 0.8 | 99.4 |

Example 8

The protein content of fish meal was determined in a "Kjel-Foss Automatic". "Foss-Tabs" (0.25 g of mercuric oxide, 5 g of potassium sulphate) were used as reference and the efficiency thereof was compared to the efficiency of tablets containing 0.8 g of potassium antimonate and 4.6 g of potassium sulphate ("Sb tabs"), tablets containing 0.8 g of potassium antimonate, 0.2 g of zinc sulphate heptahydrate, 0.07 g of cupric sulphate pentahydrate and 4.8 g of potassium sulphate ("Sb/Zn/Cu tabs") and powdery mixtures containing zirconium dioxide, titanium dioxide and selenium dioxide, respectively, both as the sole catalyst and in admixture with cupric sulphate pentahydrate as co-catalyst. Each determination was performed 10 times. The results appear from the below Table VII:

Table VII
Protein determination in fish meal.

| Catalyst | Protein content, % | Relative standard deviation, % | Refound content of protein, % |
|---|---|---|---|
| 3 Foss-Tabs | 67.4 | 0.7 | x |
| 3 Sb/Zn/Cu tabs | 67.5 | 0.7 | 100.1 |
| 3 Sb tabs | 66.7 | 0.5 | 97.4 |
| 0.75 g zirconium dioxide<br>15 g potassium sulphate | 65.4 | 1.3 | 97.0 |
| 0.2 g zirconium dioxide<br>0.95 g copper sulphate pentahydrate<br>15 g potassium sulphate | 65.5 | 0.7 | 97.2 |
| 0.9 g titanium<br>15 g potassium sulphate | 63.8 | 8.1 | 94.7 |
| 0.45 g titanium dioxide<br>0.7 g copper sulphate pentahydrate<br>15 g potassium sulphate | 65.4 | 2.6 | 97.0 |
| 1.0 g selenium dioxide<br>15 g potassium sulphate | 66.1 | 0.8 | 98 (*) |
| 0.5 g selenium dioxide<br>0.65 g copper sulphate pentahydrate<br>15 g potassium sulphate | 66.6 | 0.8 | 98.8 (*) |

(*) Free selenium sublimed and was deposited as a layer at the neck and the cover of the flask.

Example 9

In a similar manner as in Example 8, the efficiency of antimonate in combination with cupric sulphate pentahydrate, zinc sulphate heptahydrate, nickel sulphate hexahydrate and cobalt sulphate heptahydrate, respectively, was compared to the efficiency of "Foss-Tabs" in the digestion of fish meal.

In Table VIII below, the amount of protein refound using the potassium antimonate catalyst is stated in comparison with the amount determined using "Foss-Tabs", together with the standard deviations of the protein content determined. It will be noted that nickel does not show any significant co-catalyst effect.

Table VIII

| Catalyst | Number of deter- minations | Relative standard deviation, % | Efficiency digestion of amount refound, % |
|---|---|---|---|
| Foss-Tabs | 17 | 0.68 | 99.1 |
| 0.3 g $CuSO_4 \cdot 5H_2O$ | | | |
| 2.4 g $KSb(OH)_6$ | 17 | 0.88 | |
| 15  g $K_2SO_4$ | | | |
| Foss-Tabs | 18 | 0.99 | 99.0 |
| 0.3  g $ZnSO_4 \cdot 7H_2O$ | | | |
| 2.4  g $KSb(OH)_6$ | 14 | 0.50 | |
| 15  g $K_2SO_4$ | | | |
| Foss-Tabs | 17 | 0.79 | 98.0 |
| 0.3  g $NiSO_4 \cdot 6H_2O$ | | | |
| 2.4  g $KSb(OH)_6$ | 17 | 0.77 | |
| 15  g $K_2SO_4$ | | | |
| Foss-Tabs | 14 | 0.78 | 99.5 |
| 0.3  g $CoSo_4 \cdot 7H_2O$ | | | |
| 2.4  g $KSb(OH)_6$ | 14 | 0.50 | |
| 15  g $K_2SO_4$ | | | |

**Claims**

1. A process for the determination of the nitrogen content of a sample according to the Kjeldahl principle using a catalyst, characterised in that the catalyst is an antimonate or a mixed oxide of a metal oxide and $Sb_2O_5$ and/or $Sb_2O_4$.

2. A process as claimed in claim 1 characterised in that the sample is digested with concentrated sulphuric acid in the presence of the catalyst and ammonia is distilled from the ammonium sulphate formed into a measured quantity of standard sulphuric acid.

3. A process as claimed in claim 1 or claim 2 characterised in that the antimonate is potassium antimonate.

4. A process as claimed in any of claims 1 to 3 characterised in that a salt is added to increase the boiling point of the digestion mixture.

5. A process as claimed in claim 4 characterised in that the salt is sodium sulphate and/or potassium sulphate.

6. A process as claimed in any of claims 1 to 5 characterised in that a zinc salt and/or a copper salt is added as co-catalyst.

7. A process as claimed in any of claims 1 to 6 characterised in that the catalyst and, optionally, a co-catalyst and, optionally, a boiling point-increasing salt is added in binder-free tablet form.

8. A process as claimed in any of claims 1 to 7 characterised in that it is carried out automatically or semi-automatically.

9. A digestion catalyst for the determination of the nitrogen content of a sample according to the Kjeldahl principle which comprises an antimonate or a mixed oxide of a metal oxide and $Sb_2O_5$ and/or $Sb_2O_4$ and a boiling point-increasing salt.

10. A catalyst as claimed in claim 9 comprising potassium antimonate as the antimonate.

11. A catalyst as claimed in claim 9 or claim 10 comprising sodium sulphate and/or potassium

15

sulphate as the boiling point-increasing salt.

12. A catalyst as claimed in any of claims 9 to 11 comprising a zinc salt and/or a copper salt as a co-catalyst.

13. A catalyst as claimed in any of claims 9 to 12, in tablet form, comprising from 0.2 to 3 g of potassium antimonate and from 2 to 5 g of potassium sulphate per tablet.

14. A catalyst as claimed in claim 13 comprising from 0.5 to 1.5 g of potassium antimonate per tablet.

15. A catalyst as claimed in any of claims 9 to 14 comprising about 0.8 g of potassium antimonate, about 0.2 g of zinc sulphate heptahydrate, about 0.07 g of cupric sulphate pentahydrate and about 4.8 g of potassium sulphate.

## Revendications

1. Procédé de détermination de la teneur en azote d'un échantillon selon le principe de Kjeldahl en faisant appel à un catalyseur, caractérisé en ce que le catalyseur est un antimoniate ou un oxyde mélangé constitué par un oxyde métallique et du $Sb_2O_5$ et/ou du $Sb_2O_4$.

2. Procédé selon la revendication 1, caractérisé en ce que l'échantillon est digéré avec de l'acide sulfurique concentré en présence du catalyseur et en ce que de l'ammoniac est distillé à partir du sulfate d'ammonium constitué selon une quantité mesurée à partir d'acide sulfurique standard.

3. Procédé selon l'une quelconque des revendications 1 ou 2, caractérisé en ce que l'antimoniate est de l'antimoniate de potassium.

4. Procédé selon l'une quelconque des revendications 1 à 3, caractérisé en ce qu'on ajoute un sel pour élever le point d'ébullition du mélange de digestion.

5. Procédé selon la revendication 4, caractérisé en ce que le sel est du sulfate de sodium et/ou du sulfate de potassium.

6. Procédé selon l'une quelconque des revendications 1 à 5, caractérisé en ce qu'on ajoute en tant que co-catalyseur un sel de zinc et/ou un sel de cuivre.

7. Procédé selon l'une quelconque des revendications 1 à 6, caractérisé en ce qu'on ajoute le catalyseur et, éventuellement, un co-catalyseur et, éventuellement, un sel élevant le point d'ébullition sous forme d'un comprimé ne contenant pas de liant.

8. Procédé selon l'une quelconque des revendications 1 à 7, caractérisé en ce qu'il est mis en oeuvre automatiquement ou semi-automatiquement.

9. Catalyseur de digestion destiné à la détermination de la teneur en azote d'un échantillon selon le principe de Kjeldahl, caractérisé en ce qu'il comprend un antimoniate ou un oxyde mélangé constitué par un oxyde métallique et du $Sb_2O_5$ et/ou $Sb_2O_4$ et un sel élevant le point d'ébullition.

10. Catalyseur selon la revendication 9, caractérisé en ce qu'il comprend de l'antimoniate de potassium qui constitue l'antimoniate.

11. Catalyseur selon la revendication 10, caractérisé en ce qu'il comprend du sulfate de sodium et/ou du sulfate de potassium qui constitue le sel élevant le point d'ébullition.

12. Catalyseur selon l'une quelconque des revendications 9 à 11, caractérisé en ce qu'il comprend un sel de zinc et/ou un sel de cuivre qui constitue le co-catalyseur.

13. Catalyseur selon l'une quelconque des revendications 9 à 12, se présentant sous forme de comprimé, caractérisé en ce qu'il comprend de 0,2 à 3 g d'antimoniate de potassium et de 2 à 5 g de sulfate de potassium par comprimé.

14. Catalyseur selon la revendication 13, caractérisé en ce qu'il comprend de 0,5 à 1,5 g d'antimoniate de potassium par comprimé.

15. Catalyseur selon l'une quelconque des revendications 9 à 14, caractérisé en ce qu'il comprend environ 0,8 g d'antimoniate de potassium, environ 0,07 g de sulfate pentahydrate cuivrique et environ 4,8 g de sulfate de potassium.

## Patentansprüche

1. Verfahren zur Bestimmung des Stickstoffgehaltes einer Probe nach Kjeldahl unter Einsatz eines Katalysators, dadurch gekennzeichnet, daß als Katalysator ein Antimonat oder ein gemischtes Oxid aus einem Metalloxid und $Sb_2O_5$ und/oder $Sb_2O_4$ eingesetzt wird.

2. Verfahren nach Anspruch 1, dadurch gekennzeichnet, daß die Probe mit konzentrierter Schwefelsäure in Gegenwart des Katalysators digeriert wird und Ammoniak aus dem gebildeten Ammoniumsulfat in eine gemessene Menge einer Standard-Schwefelsäure hineindestilliert wird.

3. Verfahren nach mindestens einem der Ansprüche 1 oder 2, dadurch gekennzeichnet, daß als Antimonat das Kaliumantimonat eingesetzt wird.

4. Verfahren nach mindestens einem der Ansprüche 1 bis 3, dadurch gekennzeichnet, daß zur Erhöhung des Siedepunktes des Digerierungs-Gemisches ein Salz hinzugefügt wird.

5. Verfahren nach Anspruch 4, dadurch gekennzeichnet, daß als Salz Natriumsulfat und/oder Kaliumsulfat eingesetzt wird.

6. Verfahren nach mindestens einem der Ansprüche 1 bis 5, dadurch gekennziechnet, daß ein

16

Zinksalz und/oder ein Kupfersalz als Cokatalysator hinzugefügt wird.

7. Verfahren nach mindestens einem der Ansprüche 1 bis 6, dadurch gekennzeichnet, daß der Katalysator und gegebenenfalls ein Cokatalysator und gegebenenfalls ein den Siedepunkt erhöhendes Salz in Form einer bindemittelfreien Tablette hinzugesetzt werden.

8. Verfahren nach mindestens einem der Ansprüche 1 bis 7, dadurch gekennzeichnet, daß es automatisch oder halbautomatisch durchgeführt wird.

9. Digerierungs-Katalysator zur Bestimmung des Stickstoffgehaltes einer Probe nach Kjeldahl, dadurch gekennzeichnet, daß er ein Antimonat oder ein gemischtes Oxid aus einem Metalloxid und $Sb_2O_5$ und/oder $Sb_2O_4$ und ein den Siedepunkt erhöhendes Salz enthält.

10. Katalysator nach Anspruch 9, dadurch gekennzeichnet, daß er Kaliumantimonat als Antimonat enthält.

11. Katalysator nach mindestens einem der Ansprüche 9 oder 10, dadurch gekennzeichnet, daß er Natriumsulfat und/oder Kaliumsulfat als den Siedepunkt erhöhendes Salz enthält.

12. Katalysator nach mindestens einem der Ansprüche 9 bis 11, dadurch gekennzeichnet, daß er ein Zinksalz und/oder ein Kupfersalz als Cokatalysator enthält.

13. Katalysator nach mindestens einem der Ansprüche 9 bis 12 in Tablettenform, dadurch gekennzeichnet, daß er 0,2 bis 3 g Kaliumantimonat und 2 bis 5 g Kaliumsulfat pro Tablette enthält.

14. Katalysator nach Anspruch 13, dadurch gekennzeichnet, daß er 0,5 bis 1,5 g Kaliumantimonat pro Tablette enthält.

15. Katalysator nach mindestens einem der Ansprüche 9 bis 14, dadurch gekennzeichnet, daß er etwa 0,8 g Kaliumantimonat, etwa 0,2 g Zinksulfat-Heptahydrat, etwa 0,07 g Kupfersulfat-Pentahydrat und etwa 4,8 g Kaliumsulfat enthält.